# EUROPEAN PATENT SPECIFICATION

(11) **EP 1 167 887 B1**
(45) Date of publication and mention of the grant of the patent: **01.12.2004**
(21) Application number: 01113513.4
(22) Date of filing: 11.06.2001
(51) Int. Cl.: F24F 1/00, F24F 13/32, F16M 5/00

(54) **Support particularly for condensing units**
Halterung insbesondere für eine Kondensationseinheit
Support en particulier pour une unité de condensation

(30) Priority: 19.06.2000 IT TV000026
(43) Date of publication of application: 02.01.2002
(73) Proprietor: Tecnosystemi S.P.A., 31029 Vittorio Veneto (Treviso) (IT)
(72) Inventor: Rigoni, Giorgio, 31015 Conegliano (Treviso) (IT)
(74) Representative: Modiano, Guido, Dr.-Ing.

(56) References cited:
- US-A- 3 722 845
- US-A- 3 790 115
- US-A- 3 866 867
- US-A- 5 961 093

## Description

The present invention relates to a support particularly for condensing units.

Currently, the provision of an air conditioning system entails the use of an external condensing unit and of an internal unit, which are mutually connected by means of an electrical connection and by means of two thermally insulated pipes adapted to convey the refrigerant fluid between the two units.

Document US-A-3 722 845 discloses a support in the form of a ground mounting base with four holes at which a fixing means is arranged.

Floor-mounting of the condensing unit raises the problem of vibrations when in operation: for this purpose, it is known to use floor-mounted supports which are substantially constituted by a box-like body made of plastic material being open at its ends and shaped essentially like a parallelepiped; such box-like bodies are internally provided with a cellular structure and have, on the surface that lies opposite the surface that rests on the ground, a longitudinal slot which accommodates the head of a bolt which is slidingly associable therewith.

However, this conventional solution suffers drawbacks: the installer must in fact place the condensing unit on top of a pair of supports, in which he must have placed a pair of bolts beforehand, taking care that the center distance between the two protruding threads of the two bolts of each support corresponds to suitable holes provided in mounting feet which protrude transversely of the condensing unit.

This positioning operation is not easy, since it is necessary to first position the supports, then measure the center distance between the holes of the mounting feet, then position the threaded stems of the bolts, and finally lift the condensing unit and insert the threaded stems in the holes of the feet. This operation is not always easy, since a slight difference in the position of the threaded stems is sufficient to cause difficulty in installation; accordingly, it is necessary to have for example two operators, so that each operator checks from his side the arrangement of the threaded stems at the respective holes of the adjacent mounting foot of the condensing unit.

Moreover, in this known type of support it is necessary to fix the condensing unit to the supports by moving the condensing unit back and forth so as to arrange it at a preset distance, for example from an adjacent wall.

These known supports further have open ends; this requires subsequent closure of such ends with appropriate plugs, which are supplied separately.

This, too, is a problem, since in order to contain costs some installers do not supply the plugs, consequently making the supports unsightly and allowing the nesting of insects, such as wasps, in the cellular structure.

It is also known to use injection-molded supports which are shaped like parallelepipeds and are closed at their ends. This solution solves the problem of closure plugs, but entails locking the condensing unit by using self-tapping screws which do not ensure sturdy mounting. Moreover, it would be unthinkable to provide holes in such supports in order to use nuts and bolts, since besides requiring the exact measurements of the position of the holes provided in the feet at the axis of the condensing unit it would also be necessary to turn such unit upside down in order to tighten the nut.

The aim of the present invention is therefore to solve the mentioned problems and eliminate the drawbacks of the cited known art by providing a support which allows quick and easy positioning of the perforated feet of a condensing unit as well as rapid and optimum locking thereof.

Within this aim, an object of the invention is to provide a support for condensing units which allows, for any model of condensing unit associable therewith, a correct positioning in the sense of distance of the rear part of said condensing unit from an adjacent wall.

Another object is to provide a support for condensing units which has vibration-damping properties, is resistant to high temperature, has a high load-bearing capacity, is aesthetically pleasant and cannot be used as a nest by insects such as bees or wasps.

Another object is to provide a support for condensing units which is structurally simple and has low manufacturing costs.

This aim and these and other objects which will become better apparent hereinafter are achieved by a support particularly for condensing units, comprising a box-like body characterized in that it has, on the opposite side with respect to the side that rests on the ground, a first base provided with a hole at which a fixing means is arranged on the underside, and a second base provided with an axial slot for slidingly locking the head of the fixing means.

Further characteristics and advantages of the support according to the invention will become better apparent from the detailed description of a particular embodiment thereof, illustrated only by way of non-limitative example in the accompanying drawings, wherein:

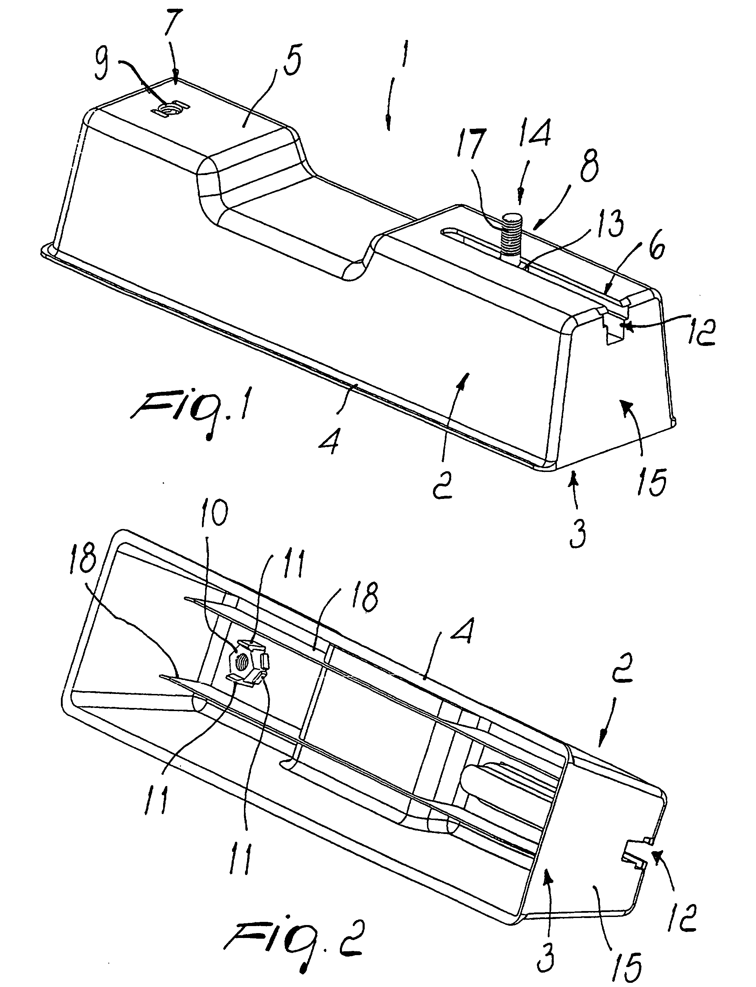

Figure 1 is an perspective side elevation view of the support according to the invention;

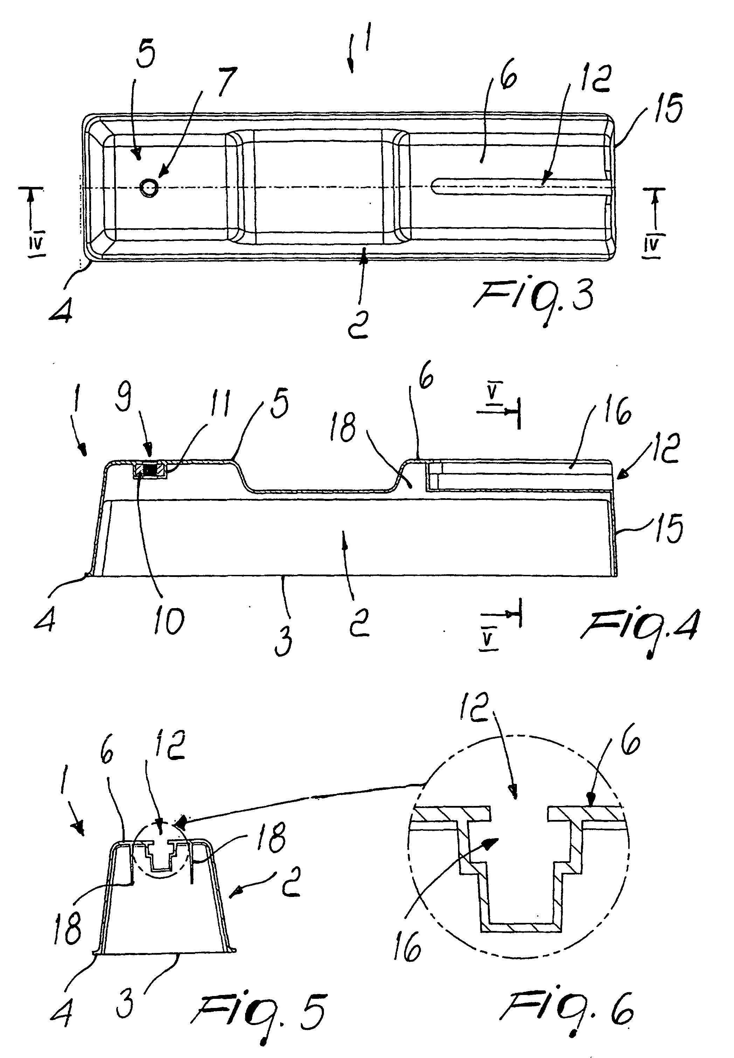

Figure 2 is a view of the support, similar to Figure 1, but from below;
Figure 3 is a top plan view of the support;
Figure 4 is a sectional view, taken along the line IV-IV of Figure 3;
Figure 5 is a sectional view, taken along the line V-V of Figure 4;
Figure 6 is a view of a detail of Figure 5.

With reference to the figures, the numeral 1 designates a support particularly for supporting a condensing unit.

The support is constituted by a box-like body 2 made of plastics which is substantially shaped like a parallelepiped and has a trapezoidal cross-section; the box-like body 2 is hollow, and at a lower peripheral edge 3 thereof a flat rim 4 is provided to improve its ground resting stability.

On the opposite side with respect to the lower peripheral edge 3, the box-like body 2 has, at its lateral ends, a first flat base 5 and a second flat base 6 which respectively have first fixed locking means 7 and second adjustable locking means 8 for suitable feet which protrude below a condensing unit.

A hole 9 is formed at the first flat base 5, and a fixing means, for example a nut 10, is associated at the hole on the internal surface of the first flat base 5; the nut is conveniently associated by way of adapted wings 11, optionally of the flexible and/or self-locking type, which protrude below the first flat base 5 in a region being adjacent to the hole 9.

Alternatively, the nut 10 can be molded directly in the plastic material during the production of the box-like body 2.

An axial slot 12 is instead formed at the second flat base 6 and allows to position, so as to permit longitudinal sliding and locking at right angles to the second flat base 6, the head 13 of a bolt 14 which can be removably inserted in said slot.

The slot 12 is obtained starting from the lateral edge 15 of the box-like body 2 that is adjacent to the second flat base 6.

The slot 12 is connected to an adapted seat 16 formed under the second flat base 6; seat 16 has a substantially T-shaped cross-section which allows to slidingly position the head 13 and allows the stem 17 of the bolt 14 to protrude while preventing the extraction of the bolt 14 along an axis which is perpendicular to the second flat base 6.

Alternatively, a nut can be arranged in the slot 12; likewise, a bolt can be arranged at the hole 9.

Advantageously, the seat 16 is obtained during the molding step of the box-like body 2 and is therefore surrounded by plastic material which does not connect it to the inside of the box-like body 2.

The box-like body 2 is further provided internally with adapted strengthening wings 18 arranged longitudinally to the first and second flat bases.

Use of the support according to the invention is therefore as follows: the installer places a pair of supports on the ground at a suitable distance, for example, from an adjacent wall, without checking beforehand the center distance between adapted holes formed at the feet provided under the condensing unit.

Advantageously, the support is arranged so that the slot 12 is directed toward said wall.

The presence of the hole 9 and of the corresponding nut 10 clearly indicates a required front point for fixing the condensing unit; therefore, regardless of the thickness of any model of condensing unit, such thickness only varies the extent of the space to the rear between the condensing unit and the wall, thus considerably improving the front visual aesthetics of the condensing unit.

The provision of the slot 12 allows the installer to slide the bolt 14 easily: it is sufficient to slightly tilt the condensing unit so as to make the stem 17 of the bolt 14 match up with an adapted hole provided in the feet that are located below said condensing unit.

It has thus been observed that the invention has achieved the intended aim and objects, a support having been provided which allows to achieve rapid, easy and precise positioning of the perforated feet of a condensing unit, these operations being executable even by a single installer.

Moreover, optimum and rapid locking of the condensing unit is achieved regardless of the model being used; simultaneously, correct positioning, in the sense of distance from an adjacent wall of the rear part of the condensing unit, is achieved.

Finally, a condensing unit is obtained which is aesthetically pleasant, since it is closed perimetrically and is not usable as a nest by insects such as bees or wasps.

The materials used, as well as the dimensions of the individual components of the invention, may of course be the most pertinent according to requirements.

The disclosures in Italian Utility Model Application No. TV2000U000026 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A support particularly for condensing units, comprising a box-like body (2) **characterized in that** it has, on the opposite side with respect to the side that rests on the ground, a first base (5) provided with a hole (9) at which a first fixing means (10) is arranged on the underside, and a second base (6) provided with an axial slot (12) for slidingly locking the head 13 of a second fixing means (14).

2. The support according to claim 1, **characterized in that** said box-like body (2), made of plastics, is shaped like a parallelepiped and has a trapezoidal cross-section; said box-like body being internally hollow and having a flat rim (4) at its lower peripheral edge.

3. The support according to claims 1 and 2, **characterized in that** on the opposite side with respect to said lowerqeripheral edge, at the lateral ends, a first flat base (5) and a second flat base (6) are provided which respectively have first fixed locking means (7) and second adjustable locking means (8) for adapted feet which protrude below a condensing unit.

4. The support according to claims 1 and 3, **characterized in that** said first fixed locking means (7) are constituted by a hole (9) formed at said first flat base (5) and by a bolt or nut (10) which is associated with the internal surface of the first flat base (5) at said hole (9).

5. The support according to claim 4, **characterized in that** a nut (10) is associated, or a bolt is arranged, at said hole (9) inside said first flat base (5).

6. The support according to claim 5, **characterized in that** said nut (10) is associated with said internal surface of said first flat base (5) by means of wings (11) which protrude below said first flat base (5) in a region being adjacent to said hole (9).

7. The support according to claims 1 and 5, **characterized in that** said nut (10) is molded directly in the plastic material during the production of said box-like body.

8. The support according to one or more of the preceding claims, **characterized in that** said second adjustable means (8) for locking adapted feet which protrude below a condensing unit are constituted bya slot (12) which is formed axially at said second flat base (6) and allows the positioning, so as to permit longitudinal sliding, and the locking, in a direction at right angles to said second flat base, of the head (13) of a bolt (14) or nut which can be removably inserted therein.

9. The support according to claim 8, **characterized in that** said slot (12) is obtained starting from the lateral edge of said box-like body that is adjacent to said second flat base.

10. The support according to claim 9, **characterized in that** said slot (12) is connected to an adapted seat (16) which is formed below said second flat base (6) and has a substantially T-shaped cross-section which allows the sliding positioning of said nut or said head (13) and the protrusion of said respective stem (17) of said bolt (14) so as to simultaneously prevent the extraction of said bolt or nut along an axis which is perpendicular to said second flat base.

11. The support according to claim 10, **characterized in that** said seat (18) is obtained during the molding step of said box-like body and is surrounded by plastic material which does not connect it to the inside of said box-like body.

12. The support according to one or more of the preceding claims, **characterized in that** said box-like body is internally provided with strengthening wings (18) arranged longitudinally to said first and second flat bases.

## Patentansprüche

1. Halterung insbesondere für Kondensationseinheiten mit einem kastenartigen Körper (2), **dadurch gekennzeichnet, dass** dieser an der gegenüberliegenden Seite in Bezug auf die Seite, die auf dem Boden aufliegt, eine erste mit einem Loch (9) versehene Grundfläche (5), an dem eine erste Befestigungsvorrichtung (10) an der Unterseite angeordnet ist, und eine zweite Grundfläche (6) aufweist, die mit einem axialen Schlitz (12) zum gleitenden Arretieren des Kopfes (13) einer zweiten Befestigungsvorrichtung (14) versehen ist.

2. Halterung nach Anspruch 1, **dadurch gekennzeichnet, dass** der kastenartige Körper (2), der aus Kunststoff hergestellt ist, wie ein Parallelepiped geformt ist und einen trapezförmigen Querschnitt aufweist; der kastenartige Körper ist innerlich hohl und weist an seiner unteren Randkante eine ebene Krempe (4) auf.

3. Halterung nach Ansprüchen 1 und 2, **dadurch gekennzeichnet, dass** an der gegenüberliegenden Seite in Bezug auf die untere Randkante, an den lateralen Enden eine erste ebene Grundfläche (5) und eine zweite ebene Grundfläche (6) vorgesehen sind, die jeweils eine erste feste Arretiervorrichtung (7) und eine zweite verstellbare Arretiervorrichtung (8) für geeignete Füße aufweist, die unter einer Kondensationseinheit hervorstehen.

4. Halterung nach Ansprüchen 1 und 3, **dadurch gekennzeichnet, dass** die erste feste Arretiervorrichtung (7) durch ein Loch (9), das in der ersten ebenen Grundfläche (5) gebildet ist, und durch eine Schraube oder Mutter (10) gebildet ist, die an der Innenfläche der ersten ebenen Grundfläche (5) bei dem Loch (9) angelagert ist.

5. Halterung nach Anspruch 4, **dadurch gekennzeichnet, dass** eine Mutter (10) an dem Loch (9) innerhalb der ersten ebenen Grundfläche (5) angelagert oder eine Schraube angeordnet ist.

6. Halterung nach Anspruch 5, **dadurch gekennzeichnet, dass** die Mutter (10) an der Innenfläche der ersten ebenen Grundfläche (5) mittels Flügel (11) angelagert ist, die unterhalb der ersten ebenen Grundfläche (5) in einem dem Loch (9) benachbarten Bereich hervorstehen.

7. Halterung nach Ansprüchen 1 und 5, **dadurch gekennzeichnet, dass** die Mutter (10) während der Herstellung des kastenartigen Körpers direkt in das Kunststoffmaterial eingeformt ist.

8. Halterung nach einem oder mehreren der vorstehenden Ansprüche, **dadurch gekennzeichnet, dass** die zweite verstellbare Vorrichtung (8) zum Arretieren geeigneter Füße, die unter einer Kondensationseinheit hervorstehen, durch einen Schlitz (12) gebildet ist, der axial an der zweiten ebenen Grundfläche (6) ausgebildet ist, und das Positionieren, um ein longitudinales Gleiten zu erlauben, und das Arretieren des Kopfes (13) einer Schraube (14) oder einer Mutter, die entfernbar darin eingefügt sein können, in einer zu der zweiten ebenen Grundfläche rechtwinkligen Richtung ermöglicht.

9. Halterung nach Anspruch 8, **dadurch gekennzeichnet, dass** der Schlitz (12) an der lateralen Kante des kastenartigen Körpers beginnt, die der zweiten ebenen Grundfläche benachbart ist.

10. Halterung nach Anspruch 9, **dadurch gekennzeichnet, dass** der Schlitz (12) mit einer geeigneten Auflage (16) verbunden ist, die unter der zweiten ebenen Grundfläche (6) ausgebildet ist und einen im Wesentlichen T-förmigen Querschnitt aufweist, der das gleitende Positionieren der Mutter oder des Kopfes (13) und das Vorstehen des entsprechenden Schaftes (17) der Schraube (14) ermöglicht, um gleichzeitig die Entnahme der Schraube oder Mutter entlang einer Achse zu vermeiden, die senkrecht zu der zweiten ebenen Grundfläche ist.

11. Halterung nach Anspruch 10, **dadurch gekennzeichnet, dass** die Auflage (16) während des Formens des kastenartigen Körpers erhalten wird und von Kunststoffmaterial umgeben ist, welches diesen nicht mit der Innenseite des kastenartigen Körpers verbindet.

12. Halterung nach einem oder mehreren der vorstehenden Ansprüche, **dadurch gekennzeichnet, dass** der kastenartige Körper innerlich mit verstärkenden Flügeln (18) versehen ist, die longitudinal an den ersten und zweiten ebenen Grundfläche angeordnet sind.

## Revendications

1. Support, en particulier pour groupes compresseurs-condenseurs, comprenant un corps analogue à un caisson (2) **caractérisé en ce qu'**il a, du côté opposé par rapport au côté qui repose au sol, une première base (5) pourvue d'un trou (9) dans lequel un premier moyen de fixation (10) est installé sur le dessous, et une deuxième base (6) pourvue d'une fente axiale (12) pour verrouiller de manière coulissante la tête (13) d'un deuxième moyen de fixation (14).

2. Support selon la revendication 1, **caractérisé en ce que** ledit corps (2) analogue à un caisson, en matière plastique, a la forme d'un parallélépipède et a une section transversale trapézoïdale, ledit corps analogue à un caisson étant intérieurement creux et ayant un rebord plat (4) sur son bord périphérique inférieur.

3. Support selon les revendications 1 et 2, **caractérisé en ce que**, du côté opposé par rapport audit bord périphérique inférieur, aux extrémités latérales, sont présentes une première base plate (5) et une deuxième base plate (6) qui ont respectivement un premier moyen de verrouillage fixe (7) et un deuxième moyen de verrouillage réglable (8) pour des pieds rapportés qui font saillie sous un groupe compresseur-condenseur.

4. Support selon les revendications 1 et 3, **caractérisé en ce que** ledit premier moyen de verrouillage fixe (7) est constitué par un trou (9) ménagé dans ladite première base plate (5) et par un boulon ou un écrou (10) monté sur la surface interne de la première base plate (5) dans ledit trou (9).

5. Support selon la revendication 4, **caractérisé en ce qu'**un écrou (10) est installé, ou un boulon est disposé, dans ledit trou (9) à l'intérieur de ladite première base plate (5).

6. Support selon la revendication 5, **caractérisé en ce que** ledit écrou (10) est monté sur ladite surface interne de ladite première base plate (5) à l'aide d'oreilles (11) qui font saillie sous ladite première base plate (5) dans une zone adjacente audit trou (9).

7. Support selon les revendications 1 et 5, **caractérisé en ce que** ledit écrou (10) est moulé directement dans la matière plastique pendant la fabrication dudit corps analogue à un caisson.

8. Support selon une ou plusieurs des revendications précédentes, **caractérisé en ce que** ledit deuxième moyen réglable (8) pour verrouiller des pieds rapportés qui font saillie sous un groupe compresseur-condenseur est constitué par une fente (12) formée de manière axiale dans ladite deuxième base plate (6) et permettant la mise en place, de façon à permettre un coulissement longitudinal, et le verrouillage, dans une direction perpendiculaire à ladite deuxième base plate, de la tête (13) d'un boulon (14) ou d'un écrou qui peut être inséré de manière amovible dans celle-ci.

9. Support selon la revendication 8, **caractérisé en ce que** ladite fente (12) est obtenue à partir du bord latéral dudit corps analogue à un caisson adjacent à ladite deuxième base plate.

10. Support selon la revendication 9, **caractérisé en ce que** ladite fente (12) est reliée à un siège rapporté (16) qui est formé sous ladite deuxième base plate (6) et a une section transversale sensiblement en T qui permet la mise en place de façon coulissante dudit écrou ou de ladite tête et de la saillie de ladite tige respective (17) dudit boulon (14) afin d'empêcher simultanément l'extraction dudit boulon ou dudit écrou sur un axe perpendiculaire à ladite deuxième base plate.

11. Support selon la revendication 10, **caractérisé en ce que** ledit siège (16) est obtenu pendant l'étape de moulage dudit corps analogue à un caisson et est entouré par de la matière plastique qui ne relie pas celui-ci à l'intérieur dudit corps analogue à un caisson.

12. Support selon une ou plusieurs des revendications précédentes, **caractérisé en ce que** ledit corps analogue à un caisson est pourvu intérieurement d'oreilles de renforcement (18) disposées dans 1a direction longitudinale desdites première et deuxième bases plates.
